(19) **Europäisches Patentamt / European Patent Office / Office européen des brevets**

(11) **EP 4 672 626 A1**

(12) **EUROPEAN PATENT APPLICATION**
published in accordance with Art. 153(4) EPC

(43) Date of publication:
**31.12.2025 Bulletin 2026/01**

(21) Application number: **23923781.1**

(22) Date of filing: **21.11.2023**

(51) International Patent Classification (IPC):
**H04B 7/0417** (2017.01)     **H04B 7/0456** (2017.01)

(52) Cooperative Patent Classification (CPC):
**H04B 7/0417; H04B 7/0456; H04B 7/06;
H04B 17/391; H04L 5/00**

(86) International application number:
**PCT/CN2023/132938**

(87) International publication number:
**WO 2024/174618 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.02.2023 CN 202310193127**

(71) Applicant: ZTE Corporation
**Shenzhen, Guangdong 518057 (CN)**

(72) Inventors:
• **JIAN, Mengnan**
  **Shenzhen, Guangdong 518057 (CN)**
• **CHEN, Yijian**
  **Shenzhen, Guangdong 518057 (CN)**
• **ZHANG, Shujuan**
  **Shenzhen, Guangdong 518057 (CN)**
• **YU, Hongkang**
  **Shenzhen, Guangdong 518057 (CN)**

(74) Representative: **Mozzi, Matteo**
**Jacobacci & Partners S.p.A.**
**Via Senato, 8**
**20121 Milano (IT)**

(54) **CHANNEL PARAMETER RECEIVING METHOD, CHANNEL PARAMETER FEEDBACK METHOD, DEVICE, AND MEDIUM**

(57)     The present disclosure provides a channel parameter receiving method, a channel parameter feedback method, a device, and a medium. The receiving method includes: receiving an indication parameter; determining a value of a second parameter according to the indication parameter; and determining a target codeword according to the value of the second parameter, wherein a codeword block of the target codeword may be represented by $\alpha_i G_i$, $i \in \{1, 2, 3, 4\}$, at least one $G_i$ is determined according to a function $f(t_1, t_2)$, $t_1$ represents a first parameter, and $t_2$ represents the second parameter.

| Receive an indication parameter, the indication parameter being determined according to channel information | S210 |

↓

| Determine a value of a second parameter according to the indication parameter | S220 |

↓

| Determine a target codeword according to the value of the second parameter | S230 |

Fig. 5

EP 4 672 626 A1

**Description**

**Cross-Reference to Related Application**

This application is based on and claims priority to Chinese patent application No. 202310193127.9, filed on February, 20, 2023, the disclosure of which is hereby incorporated by reference in its entirety.

**Technical Field**

The present disclosure relates to the technical field of communications, and in particular, to a channel parameter receiving method, a channel parameter feedback method, a device, and a medium.

**Background**

With the continuous development of wireless communications, the demand for arrays with large-scale unit antennas or elements is increasing, which leads to a continuous reduction in a boundary between the near field and the far field, and the near-field effect is becoming more and more prominent. For example, in near-field communication scenarios, the channel characteristics at the same angle and different distances vary significantly. Therefore, channel modeling should develop from angle domain modeling to multi-domain modeling. The research on near-field channels cannot be satisfied with the assumption that the distance is extremely large or the distance factor has almost no effect on the channel. The modeling of points at different spatial positions needs to take the distance factor as an important design factor. Aiming at the problem of near-field communication, the design idea of multi-domain codebook blocks may be adopted. By designing codeword parameters in different domains, different forms of near-field codebook blocks are defined to flexibly satisfy the communication quality requirements in different distance scenarios. How to acquire the codeword parameter adapted to the current distance scenario is a technical problem that needs to be solved at present.

**Summary**

Embodiments of the present disclosure provide a channel parameter receiving method, a channel parameter feedback method, a communication device, a computer-readable storage medium, and a computer program product to acquire codeword parameters adapted to a current distance scenario.

In a first aspect, the embodiments of the present disclosure provide a channel parameter receiving method, which includes: receiving an indication parameter, the indication parameter is determined according to channel information; determining a value of a second parameter according to the indication parameter; and determining a target codeword according to the value of the second parameter. The target codeword conforms to the following model:

$$W = \begin{bmatrix} \alpha_1 G_1 & \alpha_2 G_2 \\ \alpha_3 G_3 & \alpha_4 G_4 \end{bmatrix}$$, where W represents the codeword, W is a vector or a matrix with Nt rows and Nr columns, Nt≥2, Nr≥1, $\alpha_i$ is a complex number, $G_i$ is a vector or a matrix, i ∈ {1, 2, 3, 4}, at least one $G_i$ is determined according to a function f($t_1$, $t_2$), $t_1$ represents a first parameter, and $t_2$ represents the second parameter.

In a second aspect, the embodiments of the present disclosure provide a channel parameter feedback method, which includes: acquiring channel information; and determining a target codebook set according to the channel information, and determining a target codeword from the target codebook set, the target codeword conforming to the

following model: $$W = \begin{bmatrix} \alpha_1 G_1 & \alpha_2 G_2 \\ \alpha_3 G_3 & \alpha_4 G_4 \end{bmatrix}$$, where W represents the codeword, W is a vector or a matrix with Nt rows and Nr columns, Nt≥2, Nr≥1, $\alpha_i$ is a complex number, $G_i$ is a vector or a matrix, i ∈ {1, 2, 3, 4}, at least one $G_i$ is determined according to a function f ($t_1$, $t_2$), $t_1$ represents a first parameter, and $t_2$ represents a second parameter; determining an indication parameter according to the target codeword, the indication parameter is configured to indicate a value of the second parameter; and sending the indication parameter.

In a third aspect, the embodiments of the present disclosure provide a communication device, which includes: at least one processor; and at least one memory, configured to store at least one program. The at least one program is executed by the at least one processor to implement the channel parameter receiving method as described in the first aspect above, or the channel parameter feedback method as described in the second aspect above.

In a fourth aspect, the embodiments of the present disclosure provide a computer-readable storage medium, storing a program executable by a processor. The program executable by the processor is executed by the processor to implement the channel parameter receiving method as described in the first aspect above, or the channel parameter feedback method as described in the second aspect above.

In a fifth aspect, the embodiments of the present disclosure provide a computer program product, which includes a computer program or a computer instruction. The computer program or the computer instruction is stored in a computer-readable storage medium, a processor of a communication device reads the computer program or the computer instruction from the computer-readable storage medium, and the processor executes the computer program or the computer instruction to cause the communication device to perform the channel parameter receiving method as described in the first aspect above, or the channel parameter feedback method as described in the second aspect above.

According to the solutions of the embodiments of the present disclosure, the channel information is acquired first, then the target codebook set is determined according to the channel information, and then the target codeword is determined from the target codebook set. Since the target codeword is determined according to the channel information, the target codeword can be more adapted to the current channel environment and play better performance. The target codeword is the vector or the matrix including multiple codeword blocks, and the codeword block thereof may be represented by $\alpha_i G_i$, $i \in \{1, 2, 3, 4\}$, at least one $G_i$ is determined according to the function $f(t_1, t_2)$, $t_1$ represents the first parameter, and $t_2$ represents the second parameter. After the target codeword is determined, the indication parameter is determined according to the target codeword, the indication parameter being configured to indicate the value of the second parameter $t_2$, and then the indication parameter is sent. After receiving the indication parameter, the communication device at the opposite end may determine the value of the second parameter $t_2$ according to the indication parameter, and then obtain the target codeword according to the value of the second parameter $t_2$. The indication parameter of the present disclosure is determined according to the channel information and is configured to indicate the value of $t_2$. After receiving the indication parameter, the communication device may determine the value of $t_2$ according to the indication parameter to obtain the codeword adapted to the current channel environment (such as a near-field environment), so that the codeword can play better performance in a specific application scenario, thereby improving the quality of data transmission and satisfying the quality of service quality requirements in different distance scenarios. In addition, in the embodiments of the present disclosure, the value of the codeword parameter $t_2$ is indicated by the indication parameter, so that the number of feedback bits may be effectively reduced on the basis of ensuring the codebook performance.

**Brief Description of the Drawings**

Fig. 1 is a schematic diagram of a communication system architecture applicable to an embodiment of the present disclosure.

Fig. 2 is a schematic flowchart of a channel parameter feedback method according to an embodiment of the present disclosure.

Fig. 3 is a schematic diagram of interval division of an indication parameter L according to an embodiment of the present disclosure.

Fig. 4a is a schematic diagram of sparsity of a positive integer parameter according to an embodiment of the present disclosure.

Fig. 4b is a schematic diagram of sparsity of a positive integer parameter according to another embodiment of the present disclosure.

Fig. 4c is a schematic diagram of sparsity of a positive integer parameter according to another embodiment of the present disclosure.

Fig. 5 is a schematic flowchart of a channel parameter receiving method according to an embodiment of the present disclosure.

Fig. 6 is a schematic structural diagram of a communication device according to an embodiment of the present disclosure.

**Detailed Description of the Embodiments**

In order to make the purposes, technical solutions and advantages of the present disclosure clearer, the present disclosure will be further described below in detail in conjunction with the drawings and embodiments. It is to be understood that the specific embodiments described herein are only used to illustrate the present disclosure, but are not intended to limit the present disclosure.

It is to be understood that, in the description of the embodiments of the present disclosure, if "first", "second", and the like are described, they are used for descriptive purposes only, and cannot be understood as indicating or implying relative importance or implicitly indicating the number of indicated technical features or implicitly indicating the precedence relationship of the indicated technical features. "At least one" refers to one or more, and "multiple" refers to two or more. "And/or" is only an association relationship describing associated objects and represents that three relationships may exist. For example, A and/or B may represent three conditions: i.e., independent existence of A, existence of both A and B and independent existence of B. A and B may be singular or plural. The character "/" generally indicates that the contextual objects are in an "or" relationship. "At least one of the following" and similar expressions refer to any combination of these items, including a single item or any combination of plural items. For example, at least one of a, b and c may represent: a, b, c, a and b, a and c, b and c, or a and b and c, where a, b, c may be single or multiple.

In addition, the technical features involved in the various embodiments of the present disclosure described below may be combined with each other as long as they do not conflict with each other.

Multiple In Multiple Out (MIMO) technology refers to the use of multiple transmitting antennas and receiving antennas at a transmitting end and a receiving end respectively, so that signals are transmitted and received through multiple antennas at the transmitting end and the receiving end, thereby improving the communication quality. The MIMO technology can make full use of spatial resources, achieve MIMO through multiple antennas, and multiply the system channel capacity without increasing spectrum resources and antenna transmission power. In an MIMO system, the antenna of a base station includes a large number of antenna units and transceiver units. For example, the number of antenna units and transceiver units may be 128, 256 or 512. A terminal may also be configured with an antenna array composed of a large number of antenna units. However, in 6th-generation mobile communication technology, the concept of ultra-large-scale MIMO is proposed, and the number of antennas of the base station will be further increased.

During communication, the signals may be sent or received through multiple antennas of the base station and the terminal to reduce signal attenuation and improve communication quality. A dual-polarized antenna combines two antennas with mutually orthogonal polarization directions and simultaneously operates in a transmit-receive duplex mode, thereby saving the number of antennas of a single directional base station and having the advantages of an electrically adjustable antenna. The use of the dual-polarized antenna in a mobile communication network may reduce call loss, reduce interference, and improve service quality, just like the electrically adjustable antenna. In a codebook-based transmission solution, multiple codebooks are preconfigured in the base station and the terminal, each codebook containing multiple precoding matrices, then the precoding matrix corresponding to a channel between a terminal device and the base station is determined through the selected codebook, and data transmission is performed using the finally determined precoding matrix. The base station determines the precoding corresponding to a downlink measurement reference signal sent to the terminal device based on a detection reference signal resource sent by the terminal device, and sends the precoded downlink measurement reference signal to the terminal device, and the terminal device further feeds back more accurate precoding information based on the downlink measurement reference signal.

In an MIMO channel model, the near-field range may be represented as $r < \frac{2D^2}{\lambda}$, where $D$ represents the maximum dimension of the antenna array and $\lambda$ represents a wavelength. However, a Discrete Fourier Transform (DFT) codebook currently adopted is designed based on a far-field channel and does not consider the impact of the increase in the number of elements on the channel model. Therefore, the current DFT codebook is not sufficient to support the near-field communication requirements.

In order to satisfy the near-field communication environment that is very likely to exist in 5G/6G, the design of the near-field codebook becomes extremely important. The current communication protocol design adopts the DFT codebook, which only focuses on the angle factor and lacks consideration of the distance factor. Therefore, the conventional DFT codebook is difficult to satisfy the service quality requirements in different distance scenarios. The codebook performance may deteriorate in near-field transmission, thereby affecting the channel estimation quality and system capacity. Aiming at the problem of near-field communication, the design idea of multi-domain codebook blocks may be adopted. By designing codeword parameters in different domains, different forms of near-field codebook blocks are defined to flexibly satisfy the communication quality requirements in different distance scenarios. How to acquire the codeword parameter adapted to the current distance scenario is a technical problem that needs to be solved at present.

In view of this, the embodiments of the present disclosure provide a channel parameter feedback method, a channel parameter receiving method, a communication device, a computer-readable storage medium, and a computer program product. A value of a codeword parameter is indicated by an indication parameter, so as to determine a target codeword according to the codeword parameter, thereby achieving the purpose of flexibly configuring the codeword parameter according to a channel environment.

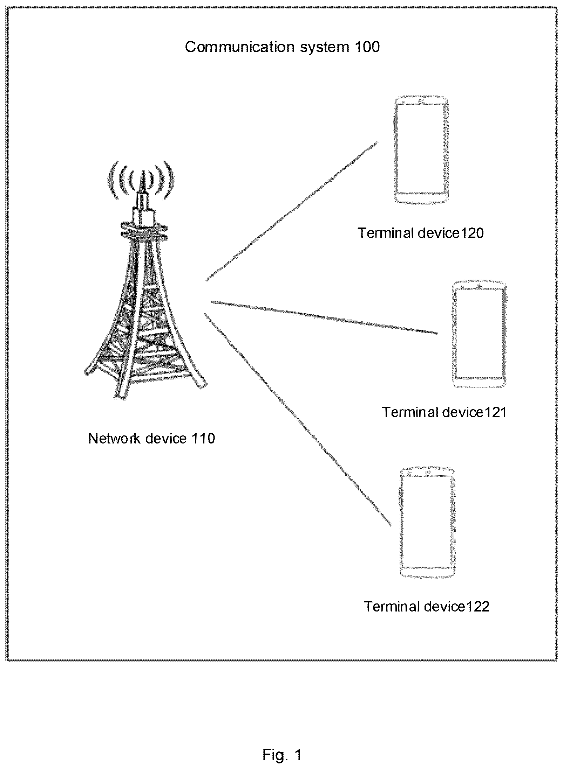

Before introducing the technical solutions of the embodiments of the present disclosure, the application scenarios of the embodiments of the present disclosure are first exemplified. Referring to Fig. 1, Fig. 1 is a schematic diagram of a communication system architecture applicable to an embodiment of the present disclosure. A communication system 100 of Fig. 1 includes multiple communication devices, and the communication devices may perform wireless communication using air interface resources. The communication device includes at least one network device and at least one terminal device. The network device in an example of Fig. 1 includes a network device 110, and the terminal device includes a terminal device 120, a terminal device 121, and a terminal device 122. Wireless communication between the communication devices includes: wireless communication between the network device and the terminal device, wireless communication between the network devices, or wireless communication between the terminal devices.

The network device in the example of Fig. 1 may be referred to as a base station. The base station may be an Evolutional Node B (eNB or eNodeB) in Long Term Evolution (LTE) and Long Term Evolution advanced (LTEA), a base station device in a 5G network, or a base station in a future communication system, etc. The base station may include various macro base stations, micro base stations, home base stations, wireless remotes, routers, Reconfigurable Intelligent Surfaces (RISs), Wireless Fidelity (WIFI) devices, or various network-side devices such as a primary cell and a secondary cell, and may also be a Location Management Function (LMF) device. No limits are made thereto in the embodiments of the present disclosure.

The terminal device in the example of Fig. 1 is a device with wireless transceiver function, which may be deployed on land including indoor or outdoor areas, handheld, wearable or on-board; the terminal device may also be arranged on the water (such as on a ship); the terminal device may further be arranged on the air (such as on an airplane, a balloon, or a satellite). The terminal may be a mobile phone, a tablet computer (or Pad), a computer with wireless transceiver function, a Virtual Reality (VR) terminal, an Augmented Reality (AR) terminal, a wireless terminal in industrial control, a wireless terminal in self driving, a wireless terminal in remote medical, a wireless terminal in a smart grid, a wireless terminal in transportation safety, a wireless terminal in a smart city, or a wireless terminal in a smart home, etc. No limits are made to the application scenario in the embodiments of the present disclosure. The terminal may sometimes be referred to as a user, User Equipment (UE), an access terminal, a UE unit, a UE station, a mobile station, a mobile remote station, a remote station, a remote terminal, a mobile device, a UE terminal, a wireless communication device, a UE agent, or a UE apparatus, etc. No limits are made thereto in the embodiments of the present disclosure.

A channel parameter feedback method and a channel parameter receiving method provided in the embodiments of the present disclosure may be applied in various communication systems, such as in at least one of the following systems: a Global System for Mobile Communications (GSM) or any other 2nd-generation cellular communication system, a Universal Mobile Telecommunications System (UMTS) based on basic Wideband Code Division Multiple Access (W-CDMA), High-Speed Packet Access (HSPA), LTE, LTEA, systems based on IEEE 802.11 specifications, systems based on IEEE 802.15 specifications and/or 5G mobile or cellular communication systems; and future mobile communication systems. However, the embodiments are not limited to the systems given in the above examples, but those skilled in the art may apply the solutions to other communication systems with necessary attributes.

It is to be understood that the communication systems described above are intended to describe the technical solutions in the embodiments of the present disclosure more clearly, but are not intended to limit the technical solutions provided in the embodiments of the present disclosure. Those of ordinary skill in the art may know that as the system architecture evolves and a new service scenario emerges, the technical solutions provided in the embodiments of the present disclosure are also applicable to similar communication systems.

It is to be understood that wireless communication between the communication devices includes reference signal transmission (including sending or receiving) between the communication devices. When a reference signal is transmitted between the communication devices, a device receiving the reference signal may be referred to as a receiving end device (the receiving end device is referred to as a first communication device in the embodiments of the present disclosure), and a device sending the reference signal may be referred to as a sending end device (the sending end device is referred to as a second communication device in the embodiments of the present disclosure).

It is to be understood that when the reference signal is transmitted in a downlink, the first communication device (receiving end device) is the terminal device, and the second communication device (sending end device) is the network device. When the reference signal is transmitted in an uplink, the first communication device (receiving end device) is the network device, and the second communication device (sending end device) is the terminal device. In some other embodiments, the first communication device and the second communication device may both be the terminal devices, or both be the network devices.

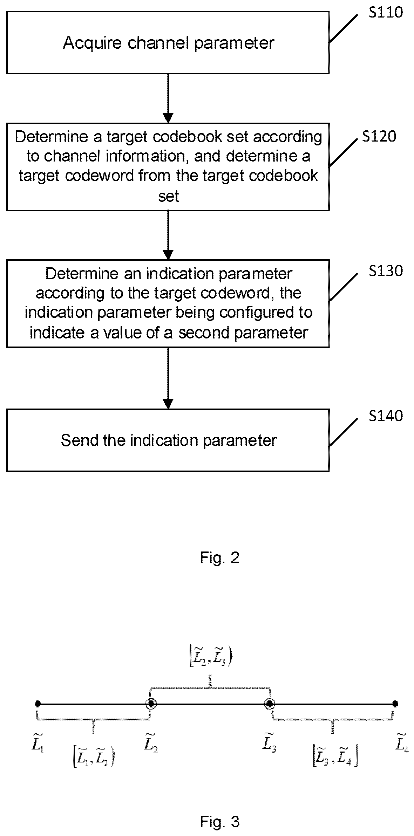

Referring to Fig. 2, Fig. 2 is a schematic flowchart of a channel parameter feedback method according to an embodiment of the present disclosure, which is applied to a first communication device. The channel parameter feedback method in the embodiments of the present disclosure includes, but is not limited to, the following S110-S140.

At S110, a channel parameter is acquired.

In one possible embodiment, the first communication device is a terminal device, a second communication device is a base station, the base station sends a downlink reference signal to the terminal device, and the terminal device obtains the channel parameter by measuring the downlink reference signal. In another possible embodiment, the first communication device is the base station, the second communication device is the terminal device, the terminal device sends an uplink reference signal to the base station, and the uplink reference signal may include Channel State Information (CSI), and correspondingly, the base station acquires the CSI from the uplink reference signal of the terminal device, and obtains the channel parameter according to information of the CSI.

Exemplarily, the channel parameter may include at least one of the following: beam parameter information, a Channel Quality Indicator (CQI), a Precoding matrix indicator (PMI), a Layer Indicator (LI), a Rank indicator (RI), and precoding information.

At S120, a target codebook set is determined according to channel information, and a target codeword is determined from the target codebook set.

The target codeword conforms to the following model:

$$W = \begin{bmatrix} \alpha_1 G_1 & \alpha_2 G_2 \\ \alpha_3 G_3 & \alpha_4 G_4 \end{bmatrix} \text{ (formula 1);}$$

where W represents a codeword model, W is a vector or a matrix with Nt rows and Nr columns, Nt$\geq$2, Nr$\geq$1, $\alpha_i$ is a complex number, $G_i$ is a vector or a matrix, i $\in$ {1, 2, 3, 4}, at least one $G_i$ is determined according to a function f ($t_i$, $t_2$), $t_1$ represents a first parameter, and $t_2$ represents a second parameter.

It is to be noted that at least one $G_i$ in the codeword model is determined according to the function f ($t_1$, $t_2$), and an expression is as follows:

$$G_i = \left[ G_{t_1,t_2,n_1}, G_{t_1,t_2,n_2}, \dots, G_{t_1,t_2,n_N} \right] \text{ (formula 2).}$$

Exemplarily, for an element $Gt_1,t_2,n_k$ in $G_i$, k $\in$ {1, 2, ..., N}, and at least one of the following forms is satisfied.

$$G_{t_1,t_2,n_k} = p_{nk} \exp\left( j2\pi \left( f_2(t_1,t_2)nk^2 + f_1(t_1,t_2)nk + a_0 \right) \right) \text{ (formula 3.1);}$$

$$G_{t_1,t_2,nk} = p_{nk} \exp\left( j2\pi \left( f_3(t_1,t_2)nk^3 + f_2(t_1,t_2)nk^2 + f_1(t_1,t_2)nk + a_0 \right) \right) \text{ (formula 3.2);}$$

$$G_{t_1,t_2,nk} = p_{nk} \exp\left( j2\pi \left( f_4(t_1,t_2)nk^4 + f_3(t_1,t_2)nk^3 + f_2(t_1,t_2)nk^2 + f_1(t_1,t_2)nk + a_0 \right) \right)$$

(formula 3.3);

where $t_1$ represents the first parameter, $t_2$ represents the second parameter, $a_0$ is a preset constant, and $p_{nk}$ represents the amplitude of a codeword element.

In the embodiments of the present disclosure, the first parameter $t_1$ is a parameter related to an angle θ, and the second parameter $t_2$ is a parameter related to both the angle θ and a distance r. Exemplarily, $t_1$ may be represented as

$t_1 = -\dfrac{sin\theta}{2}$, $t_2$ may be represented as $t_2 = \dfrac{\lambda \cos^2 \theta}{8r}$, where $\lambda$ represents a wavelength, θ represents the angle, and r represents the distance.

A codebook adopted in the embodiments of the present disclosure is configured with the first parameter and the second parameter. In view of the problems existing in near-field communication, the r value in the second parameter may be flexibly adjusted according to the channel parameter, so that the finally determined codebook can adapt to the service quality requirements in the current distance scenario. For example, in a near-field scenario, the r value in the second parameter may be limited to the near-field range, so as to obtain a codebook that satisfies the near-field communication requirements and improve the quality of data transmission in the near-field scenario. In addition, the codebook adopted in the embodiments of the present disclosure is also compatible with a far-field communication scenario. When the codebook is applied to the far-field communication scenario, it is only necessary to limit the r value in the second parameter to the far-field range.

At S130, an indication parameter is determined according to the target codeword, the indication parameter is configured to indicate a value of the second parameter.

Exemplarily, the indication parameter is recorded as L. In the embodiments of the present disclosure, the indication parameter L has a mapping relationship with the second parameter $t_2$. Therefore, after determining the target codeword, the indication parameter L corresponding to the second parameter $t_2$ in the target codeword may be obtained according to the mapping relationship.

At S140, the indication parameter is sent.

In one possible embodiment, the first communication device sends the indication parameter L to the second communication device, so that after receiving the indication parameter L, the second communication device may determine the value of the second parameter $t_2$ according to the indication parameter L, and reasonably configure the value of $t_2$ to obtain a target codeword with better performance, thereby improving the quality of data transmission, and satisfying the service quality requirements in different distance scenarios. In addition, in the embodiments of the present disclosure, the value of the codeword parameter $t_2$ is indicated by the indication parameter, so that the number of feedback bits may be effectively reduced on the basis of ensuring the codebook performance.

In the embodiments of the present disclosure, the indication parameter L is a set containing at least one element, the elements in the indication parameter L are non-negative real numbers, and the elements in the indication parameter L are related to at least one of a wavelength $\lambda$ and an antenna spacing d.

Exemplarily, an expression of the elements in the set of the indication parameter is:

$$L_k = ad^{q_1}\lambda^{q_2}N^{q_3} + b \quad \text{(formula 4)};$$

where $L_k$ represents the k-th element in the set of the indication parameter L, k is greater than or equal to 1, a, b, q1, q2, and q3 are preset coefficients (may be fixed values), $\lambda$ represents the wavelength, N represents the number of antennas, and d is a unit spacing.

In one possible embodiment, $t_1 = -\dfrac{\sin\theta}{2}$ and $t_2 = \dfrac{\lambda\cos^2\theta}{8r}$ are defined, a boundary between the near field and the far field is $\dfrac{N^2\lambda}{2}$, and a boundary between the near field and the very near field is $\dfrac{0.62}{\sqrt{8}}\lambda\sqrt{N^3}$, where $\theta$ represents a signal angle, $\lambda$ represents the wavelength, r represents the distance, and N represents the number of antennas.

For communication in near-field scenarios, r may be limited within the near-field range, i.e., satisfying the following condition: $\dfrac{0.62}{\sqrt{8}}\lambda\sqrt{N^3} \le r \le \dfrac{N^2\lambda}{2}$. Assuming that a cosine value of $\theta$ is 1 and D=Nd, according to the conditions that r needs to be satisfied within the near-field range, a minimum value of L may be obtained as: $L'_{min} = \dfrac{\lambda^2}{16N^2d^2}$, and correspondingly,

$$a = \frac{1}{16}, q_1 = -2, q_2 = 2, q_3 = -2, b = 0.$$

In addition, in order to maintain consistency with the far field, it may be considered that $L'_{min} = 0$, and correspondingly, $a = 0$, $b = 0$.

Correspondingly, when considering the near-field range and the cosine value of $\theta$ is 1, a maximum value of L may be obtained as $L'_{max} = \dfrac{\sqrt{\lambda^3}}{0.62 * 8\sqrt{N^3d^3}}$, and correspondingly,

$$a = \frac{1}{0.62 * 8}, q_1 = -\frac{3}{2}, q_2 = \frac{3}{2}, q_3 = -\frac{3}{2}, b = 0 \ .$$

Exemplarily, it may further be assumed that d=0.5λ, so that the minimum value of L may be obtained as

$$L'_{\min} = \frac{1}{4N^2}$$ , and correspondingly, $$a = \frac{1}{4}, q_1 = 0, q_2 = 0, q_3 = -2, b = 0$$ . In addition, in order to maintain consistency with the far field, it may be considered that $L'_{\min} = 0$ , and correspondingly, *a* = 0, *b* = 0.

Correspondingly, the maximum value of L may be obtained as $$L'_{\max} = \frac{1}{0.62 * \sqrt{8}\sqrt{N^3}}$$ , and correspondingly,

$$a = \frac{1}{0.62 * \sqrt{8}}, q_1 = 0, q_2 = 0, q_3 = -\frac{3}{2}, b = 0 \ .$$

It is to be understood that the indication parameter L is the set containing at least one element, and the elements contained in the set of the indication parameter L may be determined according to the minimum value and the maximum value of L. That is, the elements L ' in the set of the indication parameter L satisfy: $L'_{min} < L^{'} < L'_{max}$ .

It is to be understood that a value range of the second parameter $t_2$ may be determined according to the indication parameter L.

In one possible embodiment, the set of the indication parameter contains only one element L, that is, the indication parameter is a standard value L, the value range of the second parameter $t_2$ obtained according to the standard value L is (0, L] or [0, L], and a specific value of $t_2$ may be determined from an interval (0, L] or [0, L]. For example, *L* = {1}, then the maximum value of $t_2$ is 1, and the minimum value may be zero or close to 0.

In another possible embodiment, the set of the indication parameter L contains multiple elements, the value range of the second parameter $t_2$ obtained according to the set of the indication parameter L is [min L, max L] or (min L, max L] or [min L, max L), where min L represents the minimum value in the set of the indication parameter L, and the max L represents the maximum value in the set of the indication parameter L. For example, the set of the indication parameter L is: *L* = {0.1,1,5}, and then the value range of $t_2$ may be (0.1, 5] or [0.1, 5] or [0.1, 5). Whether the value range of $t_2$ is an open interval or a closed interval depends on the specific scenario. In general, it may be assumed that both the maximum value and the minimum value take a closed set.

It is to be understood that the value set of the second parameter $t_2$ may be determined according to the indication parameter L.

In another possible embodiment, the set of the indication parameter is recorded as L, and when L contains only one element L', the value set of the second parameter is determined according to L', the number of antennas N, and a positive integer parameter O. Specifically, the value set of the second parameter is recorded as C. For a given standard value L' of the indication parameter, when $t_1$=1, the expression of C is as follows:

$$C = \left\{ \frac{0 * L'}{ON}, \frac{L'}{ON}, \cdots, \frac{(ON-1)L'}{ON} \right\}$$ (formula 5).

In another possible embodiment, the set of the indication parameter is recorded as L, when L contains multiple elements, and $L = \{\tilde{L}_1, \tilde{L}_2, \cdots, \tilde{L}_M, \}$, the value set of the second parameter $t_2$ is determined by the number of antennas N, a positive integer parameter $O_k$ corresponding to [$\tilde{L}_k$, $\tilde{L}_{k+1}$). and a difference between $\tilde{L}_{k+1}$ and $\tilde{L}_k$, where k={1, 2, ..., M-1}.

Specifically, the value set of the second parameter is recorded as C, and a subset $C_k$ in the value set C of the second parameter $t_2$ may be determined according to any of the following formulas:

$$C_k = \left\{ \frac{0}{O_k N}, \frac{1}{O_k N}, \cdots, \frac{(O_k N - 1)}{O_k N} \right\} * \left( \tilde{L}_{k+1} - \tilde{L}_k \right) + \tilde{L}_k$$

(formula 6.1);

or,

$$C_k = \left\{ \frac{0}{O_k N}, \frac{1}{O_k N}, \cdots, \frac{(O_k N - 1)}{O_k N} \right\} * \left( \widetilde{L}_k - \widetilde{L}_{k+1} \right) + \widetilde{L}_{k+1}$$

(formula 6.2);

or,

$$C_k = \left\{ \frac{0}{O_k N}, \frac{1}{O_k N}, \cdots, \frac{O_k N}{O_k N} \right\} * \left( \widetilde{L}_{k+1} - \widetilde{L}_k \right) + \widetilde{L}_k$$

(formula 6.3);

or,

$$C_k = \left\{ \frac{1}{O_k N}, \frac{2}{O_k N}, \cdots, \frac{O_k N}{O_k N} \right\} * \left( \widetilde{L}_{k+1} - \widetilde{L}_k \right) + \widetilde{L}_k$$

(formula 6.4).

The value set of the second parameter $t_2$ is $C = C_1 \cup C_2 \cup \cdots \cup C_{M\text{-}1}$.

It is to be understood that the elements in the set $L = \{\widetilde{L}_1, \widetilde{L}_2, \cdots, \widetilde{L}_M\}$ are arranged in ascending order, and the value range of L may be divided into M-1 non-overlapping intervals. In specific applications, the positive integer parameters $O_k$ under different segments may be determined in combination with prior information such as terminal location information to obtain better performance under the same feedback amount.

As shown in Fig. 3, in an example of Fig. 3, it is assumed that M=4, and the value range of L is divided into three non-overlapping intervals, namely $[\widetilde{L}_1, \widetilde{L}_2)$, $[\widetilde{L}_2, \widetilde{L}_3)$, and $[\widetilde{L}_3, \widetilde{L}_4]$, the three non-overlapping intervals have corresponding positive integer parameters $O_1$, $O_2$, and $O_3$, respectively, and $O_1$, $O_2$, and $O_3$ may be equal or unequal positive integers.

Exemplarily, the k-th set of non-overlapping intervals of L is recorded as $[\widetilde{L}_k, \widetilde{L}_{k+1})$, and the positive integer parameters $O_k$ corresponding to the set are acquired by configuring the parameters. Different positive integer parameters $O_k$ correspond to sampling densities of different intervals, that is, the sparsity of the parameter set. By controlling the positive integer parameters $O_k$, sampling of the parameter $t_2$ in different intervals at different densities may be achieved, corresponding to different codebook functions.

For example, it is assumed that $t_1 = -\dfrac{\sin\theta}{P}, t_2 = \dfrac{\cos^2\theta}{2Qr}$ , and P and Q are fixed constants, in combination with the example in Fig. 3, the positive integer parameter may have the following configuration forms.

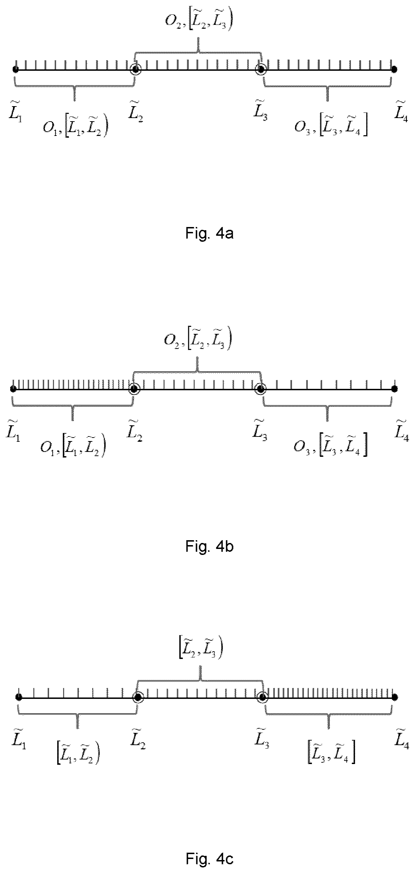

The first one is shown in Fig. 4a, where the same positive integer parameter $O_k$ is selected for all intervals, that is, $O_1\text{-}O_2=O_3$, so that the codebook has better performance of achieving type-I codebook.

The second is shown in Fig. 4b, a large positive integer parameter $O_k$ is selected for an interval $[\widetilde{L}_k, \widetilde{L}_{k+1})$ with a smaller value, and a small positive integer parameter $O_k$ is selected for an interval $[\widetilde{L}_k, \widetilde{L}_{k+1})$ with a larger value, that is, $O_1>O_2>O_3$, so that the codebook has a better function of achieving perception and positioning.

The third is shown in Fig. 4c, a large positive integer parameter $O_k$ is selected for an interval $[\widetilde{L}_k, \widetilde{L}_{k+1})$ with a larger value, and a small positive integer parameter $O_k$ is selected for an interval $[\widetilde{L}_k, \widetilde{L}_{k+1})$ with a smaller value, that is, $O_1<O_2<O_3$, so that the codebook has the performance of achieving a very near field.

For the k-th non-overlapping interval in the value range of L, the value set of the second parameter $t_2$ may be determined according to the open set/closed set of the minimum value thereof and the open set/closed set of the maximum value thereof, specifically including the following cases.

(1) In a case where the minimum value is the closed set and the maximum value is the open set:
the k-th non-overlapping interval of L is set as $[\widetilde{L}_k, \widetilde{L}_{k+1})$, and in combination with the corresponding positive integer parameter $O_k$, the value set of the second parameter $t_2$ at $[\widetilde{L}_k, \widetilde{L}_{k+1})$ (when $t_1=1$) is:

$$C_k = \left\{ \frac{0}{O_k N}, \frac{1}{O_k N}, \cdots, \frac{(O_k N - 1)}{O_k N} \right\} * \left( \widetilde{L}_{k+1} - \widetilde{L}_k \right) + \widetilde{L}_k$$

.

The value set of the second parameter $t_2$ is $C = C_1 \cup C_2 \cup \cdots \cup C_{M\text{-}1}$

(2) In a case where the minimum value is the open set and the maximum value is the closed set:

the k-th set of non-overlapping intervals of L is set as $(\tilde{L}_k, \tilde{L}_{k+1}]$, and in combination with the corresponding positive integer parameter $O_k$, the value set of the second parameter $t_2$ at $(\tilde{L}_k, \tilde{L}_{k+1}]$ (when $t_1=1$) is:

$$C_k = \left\{ \frac{0}{O_k N}, \frac{1}{O_k N}, \cdots, \frac{(O_k N - 1)}{O_k N} \right\} * \left( \tilde{L}_k - \tilde{L}_{k+1} \right) + \tilde{L}_{k+1}$$

.

The value set of the second parameter $t_2$ is $C = C_1 \cup C_2 \cup \cdots \cup C_{M-1}$.

(3) In a case where the minimum value is the closed set and the maximum value is the closed set:
the k-th set of non-overlapping intervals of L is set as $[\tilde{L}_k, \tilde{L}_{k+1}]$, and in combination with the corresponding positive integer parameter $O_k$, the value set of the second parameter $t_2$ at $[\tilde{L}_k, \tilde{L}_{k+1}]$ (when $t_1=1$) is:

$$C_k = \left\{ \frac{0}{O_k N}, \frac{1}{O_k N}, \cdots, \frac{O_k N}{O_k N} \right\} * \left( \tilde{L}_{k+1} - \tilde{L}_k \right) + \tilde{L}_k$$

.

The value set of the second parameter $t_2$ is $C = C_1 \cup C_2 \cup \cdots \cup C_{M-1}$.

(4) In a case where the minimum value is the open set and the maximum value is the open set: the k-th set of non-overlapping intervals of L is set as $(\tilde{L}_k, \tilde{L}_{k+1})$, and in combination with the corresponding positive integer parameter $O_k$, the value set of the second parameter at $(\tilde{L}_k, \tilde{L}_{k+1})$ (when $t_1=1$) is:

$$C_k = \left\{ \frac{1}{O_k N + 1}, \frac{2}{O_k N + 1}, \cdots, \frac{O_k N}{O_k N + 1} \right\} * \left( \tilde{L}_{k+1} - \tilde{L}_k \right) + \tilde{L}_k$$

.

The value set of the second parameter $t_2$ is $C = C_1 \cup C_2 \cup \cdots \cup C_{M-1}$.

In one possible embodiment, the set of the indication parameter is recorded as L, and when L contains only one element L', the second parameter $t_2$ may be determined according to any one of the following formulas:

$$t_2 \in \left\{ \frac{0L'}{NO}, \frac{L'}{NO}, \cdots, \frac{(NO-1)L'}{NO} \right\} * \left( 1 - 4P^2 t_1^2 \right) \quad \text{(formula 7.1);}$$

or,

$$t_2 \in \left\{ \frac{0L'}{NO}, \frac{L'}{NO}, \cdots, \frac{(NO-1)L'}{NO} \right\} * \frac{1}{\left( 1 - 4P^2 t_1^2 \right)} \quad \text{(formula 7.2);}$$

where P and Q are preset coefficients, and N represents the number of antennas.

It is to be understood that when the set L of the indication parameter contains only one element L', the indication parameter may be regarded as a standard value L', and the set $\left\{ \frac{0L'}{NO}, \frac{L'}{NO}, \cdots, \frac{(NO-1)L'}{NO} \right\} * \left( 1 - 4P^2 t_1^2 \right)$ or

$\left\{ \frac{0L'}{NO}, \frac{L'}{NO}, \cdots, \frac{(NO-1)L'}{NO} \right\} * \frac{1}{\left( 1 - 4P^2 t_1^2 \right)}$ of the second parameter $t_2$ may be obtained according to the standard value L', and the specific value of $t_2$ may be selected from the set of the second parameter $t_2$.

Exemplarily, it is assumed that $t_1 = -\frac{\sin\theta}{2P}$, $t_2 = \frac{8r}{Q\lambda\cos^2\theta}$, where $\lambda$ represents the wavelength, $\theta$ represents the angle, r represents the distance, and P and Q are fixed constants and remain constant for all N. The value of the second parameter $t_2$ is positively correlated with the value of the first parameter $t_1$. When the first parameter $t_1$ increases, the second parameter $t_2$ decreases accordingly. The change law between the first parameter $t_1$ and the second parameter $t_2$ is nonlinear. The relationship between the first parameter $t_1$ and the second parameter $t_2$ may be expressed by the following expression:

$$t_2 = \frac{8r}{Q\lambda\left(1-4P^2t_1^2\right)}$$ (formula 8).

The value set of the second parameter $t_2$ may be expressed by the following expression:

$$t_2 \in \left\{\frac{0L}{NO}, \frac{L}{NO}, \cdots, \frac{(NO-1)L}{NO}\right\} * \frac{1}{\left(1-4P^2t_1^2\right)}$$ (formula 9);

where N is the number of grid points of the second parameter $t_2$; O is the positive integer parameter; L is the indication parameter; and $\lambda$ is the wavelength. The value of N may be configured by the network device or pre-agreed by the network device and the terminal device.

Exemplarily, it is assumed that $t_1 = -\frac{\sin\theta}{P}, t_2 = \frac{\cos^2\theta}{2Qr}$ , where $\theta$ represents the angle, r represents the distance, and P and Q are fixed constants and remain constant for all N.

The value of the second parameter $t_2$ is negatively correlated with the value of the first parameter $t_1$. When the first parameter $t_1$ decreases, the second parameter $t_2$ increases accordingly. The change law between the first parameter $t_1$ and the second parameter $t_2$ is nonlinear. The relationship between the first parameter $t_1$ and the second parameter $t_2$ may be expressed by the following expression:

$$t_2 = \frac{1-P^2t_1^2}{2Qr}$$ (formula 10).

The value set of the second parameter $t_2$ may be expressed by the following expression:

$$t_2 \in \left\{\frac{0L}{NO}, \frac{L}{NO}, \cdots, \frac{(NO-1)L}{NO}\right\} * \left(1-P^2t_1^2\right)$$ (formula 11);

where N is the number of grid points of the second parameter $t_2$; O is the positive integer parameter; L is the indication parameter; and $\lambda$ is the wavelength. The value of N may be configured by the network device or pre-agreed by the network device and the terminal device.

In the embodiments of the present disclosure, the design idea of multi-domain codebook blocks is adopted, and different codeword parameters are designed in different domains, so as to flexibly set the corresponding codeword parameter according to the distance domain, and ensure that the codebook can obtain better performance in different distance domains. In the embodiments of the present disclosure, the value of the second parameter is indicated by the indication parameter, where the indication parameter is the set and may contain one or more elements. Each element of the indication parameter is the non-negative real number, which may be configured by a network device side and is related to the number of array antennas, the wavelength or the antenna spacing. The value range or the value set of the second parameter in the codeword parameter may be determined by the indication parameter, and then the second parameter in the codeword is configured according to the value range or the value set of the second parameter to obtain a codeword with a higher degree of adaptability to the current channel state, so that a target codeword with better performance is obtained by reasonably configuring the value of the second parameter using the indication parameter, thereby improving the quality of data transmission, and satisfying the service quality requirements in different distance scenarios. In addition, in the embodiments of the present disclosure, the value of the codeword parameter $t_2$ is indicated by the indication parameter, so that the number of feedback bits may be effectively reduced on the basis of ensuring the codebook performance.

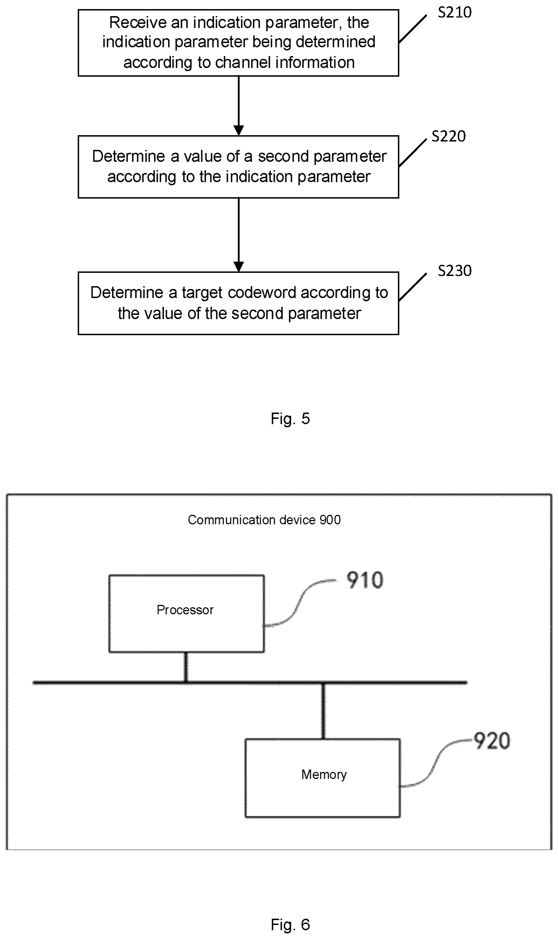

Referring to Fig. 5, Fig. 5 is a schematic flowchart of a channel parameter receiving method according to an embodiment of the present disclosure, which is applied to a second communication device. The receiving method includes, but is not limited to, the following S210-S230.

At S210, an indication parameter is received, the indication parameter is determined according to channel information.

At S220, a value of a second parameter is determined according to the indication parameter.

At S230, a target codeword is determined according to the value of the second parameter.

The target codeword conforms to the following model: $W = \begin{bmatrix} \alpha_1 G_1 & \alpha_2 G_2 \\ \alpha_3 G_3 & \alpha_4 G_4 \end{bmatrix}$ , where W represents the codeword, W is a vector or a matrix with Nt rows and Nr columns, Nt$\geq$2, Nr$\geq$1, $\alpha_i$ is a complex number, $G_i$ is a vector or a matrix, i $\in$ {1, 2, 3, 4}, at least one $G_i$ is determined according to a function f($t_1$, $t_2$), $t_1$ represents a first parameter, and $t_2$ represents the second parameter.

It is to be noted that the indication parameter may be recorded as L, and the indication parameter L has a mapping relationship with the second parameter $t_2$. After receiving the indication parameter L from a first communication device, the second communication device may determine a value range or a value set of the second parameter $t_2$ according to the indication parameter L and a preset mapping rule, and then determine the target codeword according to the value of the second parameter $t_2$.

In one possible embodiment, the first communication device is a terminal device, and the second communication device is a base station. The base station receives the indication parameter L from the terminal device, determines the second parameter $t_2$ according to the indication parameter L, and then substitutes the second parameter $t_2$ into a preset codeword model to obtain a target codebook set. The final codebook may be determined from the target codebook set in combination with CSI, and precoding processing is performed on service data to be transmitted based on the final codebook.

In another possible embodiment, the first communication device is the base station, and the second communication device is the terminal device. The terminal device receives the indication parameter L from the base station, determines the second parameter $t_2$ according to the indication parameter L and then substitutes the second parameter $t_2$ into the preset codeword model to obtain a target codeword, and demodulation is performed on data based on the target codeword.

It is to be noted that at least one $G_i$ in the codeword model is generated by the function $f(t_1, t_2)$, and an expression is as follows:

$$G_i = \left[ G_{t_1,t_2,n_1}, G_{t_1,t_2,n_2}, \dots, G_{t_1,t_2,n_N} \right].$$

Explemarily, for an element $G_{t_1,t2,nk}$ in $G_i$, k $\in$ [1, N], and at least one of the following forms is satisfied:

$$G_{t_1,t_2,n_k} = p_{nk} \exp\left( j2\pi\left( f_2(t_1,t_2)nk^2 + f_1(t_1,t_2)nk + a_0 \right) \right);$$

or,

$$G_{t_1,t_2,nk} = p_{nk} \exp\left( j2\pi\left( f_3(t_1,t_2)nk^3 + f_2(t_1,t_2)nk^2 + f_1(t_1,t_2)nk + a_0 \right) \right);$$

or,

$$G_{t_1,t_2,nk} = p_{nk} \exp\left( j2\pi\left( f_4(t_1,t_2)nk^4 + f_3(t_1,t_2)nk^3 + f_2(t_1,t_2)nk^2 + f_1(t_1,t_2)nk + a_0 \right) \right);$$

where $t_1$ represents the first parameter, $t_2$ represents the second parameter, $a_0$ is a preset constant, and $p_{nk}$ represents the amplitude of a codeword element.

It is to be understood that the value range of the second parameter $t_2$ may be determined according to the indication parameter L.

In one possible embodiment, the set of the indication parameter L contains only one element, that is, the indication parameter is a standard value L, the value range of the second parameter $t_2$ obtained according to the standard value L is (0, L] or [0, L], and a specific value of $t_2$ may be determined from an interval (0, L] or [0, L]. For example, $L = \{1\}$, then the maximum value of $t_2$ is 1, and the minimum value may be zero or close to 0.

In another possible embodiment, the set of the indication parameter L contains multiple elements, the value range of the second parameter $t_2$ obtained according to the set of the indication parameter L is [min L, max $L$] or (min L, max

L] or [min L, max L), where min L represents the minimum value in the set of the indication parameter L, and the max L represents the maximum value in the set of the indication parameter L. For example, the set of the indication parameter L is: $L = \{0.1, 1, 5\}$, and then the value range of $t_2$ may be (0.1, 5] or [0.1, 5] or [0.1, 5). Whether the value range of $t_2$ is an open interval or a closed interval depends on the specific scenario. In general, it may be assumed that both the maximum value and the minimum value are taken as a closed set.

It is to be understood that the value set of the second parameter $t_2$ may be determined according to the indication parameter L.

In one possible embodiment, the set of the indication parameter is recorded as L, and when L contains only one element L', the value set of the second parameter is determined according to L', the number of antennas N, and a positive integer parameter O. Specifically, the value set of the second parameter is recorded as C. For a given standard value L' of the indication parameter, when $t_1 = 1$, the expression of C is as follows:

$$C = \left\{ \frac{0 * L'}{ON}, \frac{L'}{ON}, \cdots, \frac{(ON-1)L'}{ON} \right\}.$$

In another possible embodiment, the set of the indication parameter is recorded as L, when L contains multiple elements, and $L = \{\tilde{L}_1, \tilde{L}_2, \cdots, \tilde{L}_M\}$, the value set of the second parameter $t_2$ is determined by the number of antennas N, a positive integer parameter $O_k$ corresponding to $[\tilde{L}_k, \tilde{L}_{k+1})$, and a difference between $\tilde{L}_{k+1}$ and $\tilde{L}_k$, where k={1, 2, ..., M-1}.

Specifically, the value set of the second parameter is recorded as C, and a subset $C_k$ in the value set C of the second parameter $t_2$ may be determined according to any of the following formulas:

$$C_k = \left\{ \frac{0}{O_k N}, \frac{1}{O_k N}, \cdots, \frac{(O_k N - 1)}{O_k N} \right\} * \left( \tilde{L}_{k+1} - \tilde{L}_k \right) + \tilde{L}_k \;;$$

or,

$$C_k = \left\{ \frac{0}{O_k N}, \frac{1}{O_k N}, \cdots, \frac{(O_k N - 1)}{O_k N} \right\} * \left( \tilde{L}_k - \tilde{L}_{k+1} \right) + \tilde{L}_{k+1} \;;$$

or,

$$C_k = \left\{ \frac{0}{O_k N}, \frac{1}{O_k N}, \cdots, \frac{O_k N}{O_k N} \right\} * \left( \tilde{L}_{k+1} - \tilde{L}_k \right) + \tilde{L}_k \;;$$

or,

$$C_k = \left\{ \frac{1}{O_k N}, \frac{2}{O_k N}, \cdots, \frac{O_k N}{O_k N} \right\} * \left( \tilde{L}_{k+1} - \tilde{L}_k \right) + \tilde{L}_k \;.$$

The value set of the second parameter $t_2$ is $C = C_1 \cup C_2 \cup \cdots \cup C_{M-1}$.

It is to be understood that the elements in the set $L = \{\tilde{L}_1, \tilde{L}_2, \cdots, \tilde{L}_M\}$ are arranged in ascending order, and the value range of L may be divided into M-1 non-overlapping intervals. In specific applications, the positive integer parameters $O_k$ under different segments may be determined in combination with prior information such as terminal location information to obtain better performance under the same feedback amount.

Exemplarily, the k-th set of non-overlapping intervals of L is recorded as $[\tilde{L}_k, \tilde{L}_{k+1})$, and the positive integer parameters $O_k$ corresponding to the set are acquired by configuring the parameters. Different positive integer parameters $O_k$ correspond to different sampling densities of intervals, that is, the sparsity of the parameter set. By controlling the positive integer parameters $O_k$, sampling of the parameter $t_2$ in different intervals at different densities may be achieved, corresponding to different codebook functions.

For example, it is assumed that $t_1 = -\dfrac{\sin\theta}{P}, t_2 = \dfrac{\cos^2\theta}{2Qr}$ , and P and Q are fixed constants, the positive integer parameter may have the following configuration forms.

The first one is that the same positive integer parameter $O_k$ is selected for all intervals, that is, $O_1=O_2=...=O_{M-1}$, so that the codebook has better performance of achieving type-I codebook.

The second is that a large positive integer parameter $O_k$ is selected for an interval $[\tilde{L}_k, \tilde{L}_{k+1})$ with a smaller value, and a small positive integer parameter $O_k$ is selected for an interval $[\tilde{L}_k, \tilde{L}_{k+1})$ with a larger value, that is, $O_1>O_2>...>O_{M-1}$, so that the codebook has a better function of achieving perception and positioning.

The third is that a large positive integer parameter $O_k$ is selected for an interval $[\tilde{L}_k, \tilde{L}_{k+1})$ with a larger value, and a small positive integer parameter $O_k$ is selected for an interval $[\tilde{L}_k, \tilde{L}_{k+1})$ with a smaller value, that is, $O_1<O_2<...<O_{M-1}$, so that the codebook has the performance of achieving a very near field.

For the k-th non-overlapping interval in the value range of L, the value set of the second parameter $t_2$ may be determined according to the open set/closed set of the minimum value thereof and the open set/closed set of the maximum value thereof, specifically including the following cases.

(1) In a case where the minimum value is the closed set and the maximum value is the open set:
the k-th non-overlapping interval of L is set as $[\tilde{L}_k, \tilde{L}_{k+1})$, and in combination with the corresponding positive integer parameter $O_k$, the value set of the second parameter $t_2$ at $[\tilde{L}_k, \tilde{L}_{k+1})$ (when $t_1=1$) is:

$$C_k = \left\{ \frac{0}{O_k N}, \frac{1}{O_k N}, \cdots, \frac{(O_k N - 1)}{O_k N} \right\} * \left( \tilde{L}_{k+1} - \tilde{L}_k \right) + \tilde{L}_k .$$

The value set of the second parameter $t_2$ is $C = C_1 \cup C_2 \cup \cdots \cup C_{M-1}$.

(2) In a case where the minimum value is the open set and the maximum value is the closed set:
the k-th set of non-overlapping intervals of L is set as $(\tilde{L}_k, \tilde{L}_{k+1}]$, and in combination with the corresponding positive integer parameter $O_k$, the value set of the second parameter $t_2$ at $(\tilde{L}_k, \tilde{L}_{k+1}]$ (when $t_1=1$) is:

$$C_k = \left\{ \frac{0}{O_k N}, \frac{1}{O_k N}, \cdots, \frac{(O_k N - 1)}{O_k N} \right\} * \left( \tilde{L}_k - \tilde{L}_{k+1} \right) + \tilde{L}_{k+1} .$$

The value set of the second parameter $t_2$ is $C = C_1 \cup C_2 \cup \cdots \cup C_{M-1}$.

(3) In a case where the minimum value is the closed set and the maximum value is the closed set:
the k-th set of non-overlapping intervals of L is set as $[\tilde{L}_k, \tilde{L}_{k+1}]$, and in combination with the corresponding positive integer parameter $O_k$, the value set of the second parameter $t_2$ at $[\tilde{L}_k, \tilde{L}_{k+1}]$ (when $t_1=1$) is:

$$C_k = \left\{ \frac{0}{O_k N}, \frac{1}{O_k N}, \cdots, \frac{O_k N}{O_k N} \right\} * \left( \tilde{L}_{k+1} - \tilde{L}_k \right) + \tilde{L}_k .$$

The value set of the second parameter $t_2$ is $C = C_1 \cup C_2 \cup \cdots \cup C_{M-1}$

(4) In a case where the minimum value is the open set and the maximum value is the open set:
the k-th set of non-overlapping intervals of L is set as $(\tilde{L}_k, \tilde{L}_{k+1})$, and in combination with the corresponding positive integer parameter $O_k$, the value set of the second parameter at $(\tilde{L}_k, \tilde{L}_{k+1})$ (when $t_1=1$) is:

$$C_k = \left\{ \frac{1}{O_k N + 1}, \frac{2}{O_k N + 1}, \cdots, \frac{O_k N}{O_k N + 1} \right\} * \left( \tilde{L}_{k+1} - \tilde{L}_k \right) + \tilde{L}_k .$$

The value set of the second parameter $t_2$ is $C = C_1 \cup C_2 \cup \cdots \cup C_{M-1}$.

In one possible embodiment, the set of the indication parameter is recorded as L, and when L contains only one element L', the second parameter $t_2$ may be determined according to any one of the following formulas:

$$t_2 \in \left\{ \frac{0L'}{NO}, \frac{L'}{NO}, \cdots, \frac{(NO-1)L'}{NO} \right\} * \left( 1 - 4P^2 t_1^2 \right) ;$$

or,

$$t_2 \in \left\{ \frac{0L'}{NO}, \frac{L'}{NO}, \cdots, \frac{(NO-1)L'}{NO} \right\} * \frac{1}{\left( 1 - 4P^2 t_1^2 \right)} ;$$

where P and Q are preset coefficients, and N represents the number of antennas.

It is to be understood that when the set L of the indication parameter contains only one element L', the indication parameter may be regarded as a standard value L', and the set

$$\left\{ \frac{0L'}{NO}, \frac{L'}{NO}, \cdots, \frac{(NO-1)L'}{NO} \right\} * \left( 1 - 4P^2 t_1^2 \right) \quad \text{or} \quad \left\{ \frac{0L'}{NO}, \frac{L'}{NO}, \cdots, \frac{(NO-1)L'}{NO} \right\} * \frac{1}{\left( 1 - 4P^2 t_1^2 \right)}$$

of the second parameter $t_2$ may be obtained according to the standard value L', or the specific value of $t_2$ may be selected from the set of the second parameters $t_2$.

Exemplarily, it is assumed that $t_1 = -\frac{\sin\theta}{2P}$, $t_2 = \frac{8r}{Q\lambda \cos^2\theta}$, where $\lambda$ represents the wavelength, $\theta$ represents the angle, r represents the distance, and P and Q are fixed constants and remain constant for all N. The value of the second parameter $t_2$ is positively correlated with the value of the first parameter $t_1$. When the first parameter $t_1$ increases, the second parameter $t_2$ decreases accordingly. The change law between the first parameter $t_1$ and the second parameter $t_2$ is nonlinear. The relationship between the first parameter $t_1$ and the second parameter $t_2$ may be expressed by the following expression:

$$t_2 = \frac{8r}{Q\lambda \left( 1 - 4P^2 t_1^2 \right)} .$$

The value set of the second parameter $t_2$ may be expressed by the following expression:

$$t_2 \in \left\{ \frac{0L}{NO}, \frac{L}{NO}, \cdots, \frac{(NO-1)L}{NO} \right\} * \frac{1}{\left( 1 - 4P^2 t_1^2 \right)} ;$$

where N is the number of grid points of the second parameter $t_2$; O is the positive integer parameter; L is the indication parameter; and $\lambda$ is the wavelength. The value of N may be configured by the network device or pre-agreed by the network device and the terminal device.

Exemplarily, it is assumed that $t_1 = -\frac{\sin\theta}{P}$, $t_2 = \frac{\cos^2\theta}{2Qr}$, where $\theta$ represents the angle, r represents the distance, and P and Q are fixed constants and remain constant for all N.

The value of the second parameter $t_2$ is negatively correlated with the value of the first parameter $t_1$. When the first parameter $t_1$ decreases, the second parameter $t_2$ increases accordingly. The change law between the first parameter $t_1$ and the second parameter $t_2$ is nonlinear. The relationship between the first parameter $t_1$ and the second parameter $t_2$ may be expressed by the following expression:

$$t_2 = \frac{1 - P^2 t_1^2}{2Qr} .$$

The value set of the second parameter $t_2$ may be expressed by the following expression:

$$t_2 \in \left\{ \frac{0L}{NO}, \frac{L}{NO}, \cdots, \frac{(NO-1)L}{NO} \right\} * \left( 1 - P^2 t_1^2 \right) ;$$

where N is the number of grid points of the second parameter $t_2$; O is the positive integer parameter; L is the indication parameter; and $\lambda$ is the wavelength. The value of N may be configured by the network device or pre-agreed by the network device and the terminal device.

It is to be noted that the channel parameter receiving method embodiment of the present disclosure is based on the same concept as the channel parameter feedback method embodiment of the present disclosure, so that the execution process, functions and brought technical effects thereof may be referred to the channel parameter feedback method embodiment part, which will not be elaborated herein.

According to the solutions of the embodiments of the present disclosure, the channel information is acquired first, then the target codebook set is determined according to the channel information, and then the target codeword is determined from the target codebook set. Since the target codeword is determined according to the channel information, the target codeword can be more adapted to the current channel environment (such as a near-field environment) and play better performance. The target codeword is the vector or the matrix including multiple codeword blocks, and the codeword block thereof may be represented by $\alpha_i G_i$, $i \in \{1, 2, 3, 4\}$, at least one $G_i$ is determined according to the function $f(t_1, t_2)$, $t_1$ represents the first parameter, and $t_2$ represents the second parameter. After the target codeword is determined, the indication parameter is determined according to the target codeword, the indication parameter being configured to indicate the value of the second parameter $t_2$, and then the indication parameter is sent. After receiving the indication parameter, the communication device at the opposite end may determine the value of the second parameter $t_2$ according to the indication parameter, and then obtain the target codeword according to the value of the second parameter $t_2$. The indication parameter of the present disclosure is determined according to the channel information and is configured to indicate the value of $t_2$. After receiving the indication parameter, the communication device may determine the value of $t_2$ according to the indication parameter to obtain the codeword adapted to the current channel environment (such as a near-field environment), so that the codeword can play better performance in a specific application scenario, thereby improving the quality of data transmission and satisfying the service quality requirements in different distance scenarios. In addition, in the embodiments of the present disclosure, the value of the codeword parameter $t_2$ is indicated by the indication parameter, so that the number of feedback bits may be effectively reduced on the basis of ensuring the codebook performance.

It is to be noted that in various specific implementations of the present disclosure, when it comes to the need to perform relevant processing according to data related to user identity or characteristics such as user information, user behavior data, user historical data, and user location information, the permission or consent of the user is obtained first, and the collection, use, and processing of these data comply with the relevant laws, regulations, and standards of the relevant countries and regions. In addition, when the embodiments of the present disclosure need to obtain the sensitive personal information of the user, the separate permission or consent of the user is obtained through a pop-up window or by jumping to a confirmation page. After clearly obtaining the separate permission or consent of the user, the necessary user-related data for the normal operation of the embodiments of the present disclosure is obtained.

Further, it is to be understood that, although the operations are described in a specific order in the drawings in the embodiments of the present disclosure, it should not be construed as requiring the operations to be performed in the specific order or serial order shown, or requiring the execution of all the operations shown to obtain the desired results. In certain environments, multitasking and parallel processing may be advantageous.

The solutions provided in the embodiments of the present disclosure are described in detail below through specific examples.

Example 1:

At S11, the base station sends the downlink reference signal to a target terminal, and correspondingly, the target terminal receives the downlink reference signal from the base station.

At S12, the target terminal measures a downlink channel of the downlink reference signal to obtain the channel information.

At S13, the target terminal selects a near field communication codebook as the target codebook set according to the channel information, and selects the target codeword from the target codebook set.

At S14, the target terminal configures the value range or the value set of the second parameter $t_2$ according to the target codeword.

At S15, the target terminal determines the indication parameter L according to the value range or the value set of the second parameter $t_2$.

At S16, the target terminal reports the indication parameter L to the base station through the uplink reference signal.

At S17, the base station acquires the indication parameter L from the uplink reference signal of the target terminal.

At S18, the base station determines the value range or the value set of the second parameter $t_2$ according to the indication parameter L.

At S19, the base station selects the target codeword according to the value range or the value set of the second parameter $t_2$, and encodes data to be transmitted to the target terminal using the target codeword.

Example 2:

At S21, the target terminal transmits the uplink reference signal to the base station, and correspondingly, the base station receives the uplink reference signal from the target terminal, the uplink reference signal carrying the channel information reported by the target terminal.

At S22, the base station acquires the channel information from the uplink reference signal, selects the near field communication codebook as the target codebook set according to the channel information, and selects the target codeword from the target codebook set.

At S23, the base station configures the value range or the value set of the second parameter $t_2$ according to the target codeword.

At S24, the base station determines the indication parameter L according to the value range or the value set of the second parameter $t_2$.

At S25, the base station sends the indication parameter L to the target terminal.

At S26, the target terminal determines the value range or the value set of the second parameter $t_2$ according to the received indication parameter L.

At S27, the target terminal determines the target codeword according to the value range or the value set of the second parameter $t_2$.

At S28, the target terminal performs demodulation on the data received from the base station according to the target codeword.

Referring to Fig. 6, the embodiments of the present disclosure further provide a communication device. The communication device 900 includes, but is not limited to, at least one processor 910 and at least one memory 920.

The at least one processor 910 is provided.

The at least one memory 920 is configured to store at least one program.

The at least one program is executed by the at least one processor 910 to implement the channel parameter receiving method or the channel parameter feedback method described in any of the above embodiments.

It is to be understood that the processor 910 and the memory 920 may be connected via a bus or other means.

It is to be understood that the above communication device may be applied to a first communication device to perform the solution of the channel parameter feedback method embodiment, and may also be applied to a second communication device to perform the solution of the channel parameter receiving method embodiment.

It is to be understood that the processor 910 may be a Central Processing Unit (CPU). The processor may also be another general-purpose processor, a Digital Signal Processor (DSP), an Application Specific Integrated Circuit (ASIC)) a Field Programmable Gate matrices, FPGA) or another programmable logical device, discrete gate or transistor logical device, discrete hardware component, etc. The general-purpose processor may be a microprocessor or the processor may be any conventional processor, etc. Or, the processor 910 may adopt one or more integrated circuits to execute relevant programs, thereby implementing the technical solutions provided by the embodiments of the present disclosure.

The memory 920, as a non-transient computer-readable storage medium, may be configured to store a non-transient software program and a non-transient computer executable program, such as the channel parameter feedback method or the channel parameter receiving method performed by a communication device side described in any embodiment of the present disclosure. The processor 910 runs the non-transient software program and instruction stored in the memory 920 to implement the above channel parameter feedback method or channel parameter receiving method.

The memory 920 may include a program storage area and a data storage area, where the program storage area may store an operating system and an application program needed by at least one function. The data storage area may store the above channel parameter feedback method or channel parameter receiving method. In addition, the memory 920 may include a high-speed Random Access Memory (RAM), or a non-transient memory, such as at least one disk storage device, a flash memory device, or other non-transient solid-state storage devices. In some implementations, the memory 920 may optionally include memories remotely located relative to the processor 910, which may be connected to the processor 910 over a network. Examples of the above network include, but are not limited to, the Internet, the Intranet, a local area network, a mobile communication network, and a combination thereof.

The non-transient software program and instruction required to implement the above channel parameter feedback method or channel parameter receiving method are stored in the memory 920, and when executed by one or more processors 910, the channel parameter feedback method or channel parameter receiving method provided in any embodiment of the present disclosure is performed.

The embodiments of the present disclosure further provide a computer-readable storage medium, storing a program executable by a processor. The program executable by the processor is executed by the processor to implement the channel parameter feedback method or channel parameter received method as described in any embodiment above.

It is to be understood that the above computer-readable storage medium may be applied to a first communication device to perform the solution of the channel parameter feedback method embodiment, and may also be applied to a second communication device to perform the solution of the channel parameter receiving method embodiment.

It is to be understood that the above communication device may be applied to the first communication device to perform the solution of the channel parameter feedback method embodiment, and may also be applied to the second communication device to perform the solution of the channel parameter receiving method embodiment.

The computer storage medium in the embodiments of the present disclosure may adopt any combination of one or more computer-readable media. The computer-readable medium may be a computer-readable signal medium or a computer-readable storage medium. The computer-readable storage medium may be, but not limited to, for example, an electrical, magnetic, optical, electromagnetic, infrared, or semiconductor system, apparatus or device, or any combination thereof. More specific examples (non-exhaustive list) of the computer-readable storage medium include an electrical connection with one or more wires, a portable computer disk, a hard disk, an RAM, a Read Only Memory (ROM), an Erasable Programmable ROM (EPROM or a flash), an optical fiber, a portable Compact Disc ROM (CD-ROM), an optical memory device, a magnetic memory device, or any proper combination thereof. In the present disclosure, the computer-readable storage medium may be any physical medium including or storing a program, and the program may be used by or in combination with an instruction execution system, apparatus or device.

The computer-readable signal medium may include a data signal in a baseband or propagated as part of a carrier, a computer-readable program code being born therein. A plurality of forms may be adopted for the propagated data signal, including, but not limited to, an electromagnetic signal, an optical signal, or any proper combination. The computer-readable signal medium may also be any readable medium except the computer-readable storage medium, and the computer-readable medium may send, propagate, or transmit a program configured to be used by or in combination with an instruction execution system, apparatus, or device.

The program code in the computer-readable medium may be transmitted with any proper medium, including, but not limited to, radio, an electric wire, an optical cable, Radio Frequency (RF), etc., or any proper combination.

The computer program code used to execute the operation of the present disclosure may be written by use of one or more program design languages or a combination thereof, and the program design language includes an object-oriented program design language such as Java, Smalltalk, and C++,and conventional procedural programming languages such as "C" language or similar programming languages. The program code may be executed completely in a user computer, executed partially in the user computer, executed as an independent software package, executed partially in the user computer and partially in a remote computer, or executed completely in the remote computer or a server. In case that the remote computer is involved, the remote computer may be connected to the user computer through a network of any type, including a Local Area Network (LAN) or a Wide Area Network (WAN), or to an external computer (for example, connected by an Internet service provider through the Internet).

The embodiments of the present disclosure further provide a computer program product, storing program instructions. The program instructions run on a communication device to cause the communication device to implement the channel parameter feedback method or the channel parameter receiving method described in any of the above embodiments.

The above is a specific description of the implementation of the present disclosure, but the present disclosure is not limited to the above implementation. Those skilled in the art may make various equivalent modifications and substitutions without departing from the spirit of the present disclosure, and such equivalent modifications and substitutions are included in the scope defined by the present disclosure.

## Claims

1.  A channel parameter receiving method, comprising:

    receiving an indication parameter, the indication parameter is determined according to channel information;
    determining a value of a second parameter according to the indication parameter; and
    determining a target codeword according to the value of the second parameter;

the target codeword conforms to the following model: $W = \begin{bmatrix} \alpha_1 G_1 & \alpha_2 G_2 \\ \alpha_3 G_3 & \alpha_4 G_4 \end{bmatrix}$ , where W represents the codeword, W is a vector or a matrix with Nt rows and Nr columns, Nt≥2, Nr≥1, $\alpha_i$ is a complex number, $G_i$ is a vector or a matrix, i ∈ {1, 2, 3, 4}, at least one $G_i$ is determined according to a function $f(t_1, t_2)$, $t_1$ represents a first parameter, and $t_2$ represents the second parameter.

2. The method according to claim 1, wherein the indication parameter is a set containing at least one element, and the elements in the set of the indication parameter are non-negative real numbers.

3. The method according to claim 2, wherein a value range of the second parameter is determined according to the indication parameter.

4. The method according to claim 3, wherein when the set of the indication parameter contains only one element L, the value range of the second parameter is (0, L] or [0, L]; and
when the set of the indication parameter contains multiple elements, the value range of the second parameter t2 is [min L, max L] or (min L, max L] or [min L, max L), the min L represents a minimum value in the set of the indication parameter, and the max L represents a maximum value in the set of the indication parameter.

5. The method according to claim 2, wherein a value set of the second parameter is determined according to the indication parameter.

6. The method according to claim 5, wherein the set of the indication parameter is recorded as L, and when L contains only one element L', the value set of the second parameter is determined according to L', the number of antennas N, and a positive integer parameter O.

7. The method according to claim 6, wherein the value set of the second parameter is recorded as C, and an expression of C is as follows:

$$C = \left\{ \frac{0 * L'}{ON}, \frac{L'}{ON}, \cdots, \frac{(ON-1)L'}{ON} \right\}$$

.

8. The method according to claim 5, wherein when the set of the indication parameter contains multiple elements, the set of the indication parameter is recorded as L and $L = \{\tilde{L}_1, \tilde{L}_2, \cdots, \tilde{L}_M\}$, the elements in L are arranged in ascending order, and M-1 non-overlapping intervals are obtained according to the set L; and
the value set C of the second parameter is determined according to the number of antennas N, a positive integer parameter $O_k$ corresponding to the k-th interval, and a difference between $\tilde{L}_{k+1}$ and $\tilde{L}_k$, where k∈{1, 2, ..., M-1}.

9. The method according to claim 8, wherein a subset $C_k$ in the value set C of the second parameter is determined according to any one of the following formulas:

$$C_k = \left\{ \frac{0}{O_k N}, \frac{1}{O_k N}, \cdots, \frac{(O_k N - 1)}{O_k N} \right\} * \left( \tilde{L}_{k+1} - \tilde{L}_k \right) + \tilde{L}_k$$

;

or,

$$C_k = \left\{ \frac{0}{O_k N}, \frac{1}{O_k N}, \cdots, \frac{(O_k N - 1)}{O_k N} \right\} * \left( \tilde{L}_k - \tilde{L}_{k+1} \right) + \tilde{L}_{k+1}$$

;

or,

$$C_k = \left\{ \frac{0}{O_k N}, \frac{1}{O_k N}, \cdots, \frac{O_k N}{O_k N} \right\} * \left( \widetilde{L}_{k+1} - \widetilde{L}_k \right) + \widetilde{L}_k ;$$

or,

$$C_k = \left\{ \frac{1}{O_k N}, \frac{2}{O_k N}, \cdots, \frac{O_k N}{O_k N} \right\} * \left( \widetilde{L}_{k+1} - \widetilde{L}_k \right) + \widetilde{L}_k .$$

10. The method according to claim 2, wherein the set of the indication parameter is recorded as L, and when L contains only one element L', the second parameter $t_2$ is determined according to any one of the following formulas:

$$t_2 \in \left\{ \frac{0L'}{NO}, \frac{L'}{NO}, \cdots, \frac{(NO-1)L'}{NO} \right\} * \left( 1 - 4P^2 t_1^2 \right) ;$$

or,

$$t_2 \in \left\{ \frac{0L'}{NO}, \frac{L'}{NO}, \cdots, \frac{(NO-1)L'}{NO} \right\} * \frac{1}{\left( 1 - 4P^2 t_1^2 \right)} ;$$

where P and Q are preset coefficients, and N represents the number of antennas.

11. The method according to claim 2, wherein the elements in the set of the indication parameter are related to at least one of a wavelength $\lambda$ and an antenna spacing d.

12. The method according to claim 11, wherein an expression of the elements in the set of the indication parameter is:

$$L_k = a d^{q_1} \lambda^{q_2} N^{q_3} + b ;$$

where $L_k$ represents the k-th element in the set L of the indication parameter, k is greater than or equal to 1, a, b, q1, q2, and q3 are preset coefficients, $\lambda$ represents the wavelength, N represents the number of antennas, and d is a unit spacing.

13. A channel parameter feedback method, comprising:

acquiring channel information;
determining a target codebook set according to the channel information, and determining a target codeword from the target codebook set, wherein the target codeword conforms to the following model: $W = \begin{bmatrix} \alpha_1 G_1 & \alpha_2 G_2 \\ \alpha_3 G_3 & \alpha_4 G_4 \end{bmatrix}$,

where W represents the codeword, W is a vector or a matrix with Nt rows and Nr columns, Nt≥2, Nr21, $\alpha_i$ is a complex number, $G_i$ is a vector or a matrix, i ∈ {1, 2, 3, 4}, at least one $G_i$ is determined according to a function f($t_1$, $t_2$), $t_1$ represents a first parameter, and $t_2$ represents a second parameter;
determining an indication parameter according to the target codeword, the indication parameter is configured to indicate a value of the second parameter; and
sending the indication parameter.

14. The method according to claim 13, wherein the indication parameter is a set containing at least one element, and the elements in the set of the indication parameter are non-negative real numbers.

15. The method according to claim 14, wherein a value range of the second parameter is determined according to the indication parameter.

16. The method according to claim 15, wherein when the set of the indication parameter contains only one element L, the value range of the second parameter is (0, L] or [0, *L*]; and
when the set of the indication parameter contains multiple elements, the value range of the second parameter t2 is [min L, max *L*] or (min *L,* max *L*] or [min L, max *L*)*, the min *L* represents a minimum value in the set of the indication parameter, and the max L represents a maximum value in the set of the indication parameter.

17. The method according to claim 14, wherein a value set of the second parameter is determined according to the indication parameter.

18. The method according to claim 17, wherein the set of the indication parameter is recorded as L, and when L contains only one element L', the value set of the second parameter is determined according to L' , the number of antennas N, and a positive integer parameter O.

19. The method according to claim 18, wherein the value set of the second parameter is recorded as C, and an expression of C is as follows:

$$C = \left\{ \frac{0 * L'}{ON}, \frac{L'}{ON}, \cdots, \frac{(ON-1)L'}{ON} \right\} .$$

20. The method according to claim 17, wherein when the set of the indication parameter contains multiple elements, the set of the indication parameter is recorded as L and $L = \{\tilde{L}_1, \tilde{L}_2, \cdots, \tilde{L}_M\}$, the elements in L are arranged in ascending order, and M-1 non-overlapping intervals are obtained according to the set L; and
the value set C of the second parameter is determined according to the number of antennas N, a positive integer parameter $O_k$ corresponding to the k-th interval, and a difference between $\tilde{L}_{k+1}$ and $\tilde{L}_k$, where k∈{1, 2, ..., M-1}.

21. The method according to claim 20, wherein a subset $C_k$ in the value set C of the second parameter is determined according to any one of the following formulas:

$$C_k = \left\{ \frac{0}{O_k N}, \frac{1}{O_k N}, \cdots, \frac{(O_k N - 1)}{O_k N} \right\} * \left( \tilde{L}_{k+1} - \tilde{L}_k \right) + \tilde{L}_k ;$$

or,

$$C_k = \left\{ \frac{0}{O_k N}, \frac{1}{O_k N}, \cdots, \frac{(O_k N - 1)}{O_k N} \right\} * \left( \tilde{L}_k - \tilde{L}_{k+1} \right) + \tilde{L}_{k+1} ;$$

or,

$$C_k = \left\{ \frac{0}{O_k N}, \frac{1}{O_k N}, \cdots, \frac{O_k N}{O_k N} \right\} * \left( \tilde{L}_{k+1} - \tilde{L}_k \right) + \tilde{L}_k ;$$

or,

$$C_k = \left\{ \frac{1}{O_k N}, \frac{2}{O_k N}, \cdots, \frac{O_k N}{O_k N} \right\} * \left( \tilde{L}_{k+1} - \tilde{L}_k \right) + \tilde{L}_k .$$

**22.** The method according to claim 14, wherein the set of the indication parameter is recorded as L, and when L contains only one element L' , the second parameter $t_2$ is determined according to any one of the following formulas:

$$t_2 \in \left\{ \frac{0L'}{NO}, \frac{L'}{NO}, \cdots, \frac{(NO-1)L'}{NO} \right\} * \left(1 - 4P^2 t_1^2\right);$$

or,

$$t_2 \in \left\{ \frac{0L'}{NO}, \frac{L'}{NO}, \cdots, \frac{(NO-1)L'}{NO} \right\} * \frac{1}{\left(1 - 4P^2 t_1^2\right)};$$

where P and Q are preset coefficients, and N represents the number of antennas.

**23.** The method according to claim 14, wherein the elements in the set of the indication parameter are related to at least one of a wavelength $\lambda$ and an antenna spacing d.

**24.** The method according to claim 23, wherein an expression of the elements in the set of the indication parameter is:

$$L_k = a d^{q_1} \lambda^{q_2} N^{q_3} + b;$$

where $L_k$ represents the k-th element in the set L of the indication parameter, k is greater than or equal to 1, a, b, q1, q2, and q3 are preset coefficients, $\lambda$ represents the wavelength, N represents the number of antennas, and d is a unit spacing.

**25.** A communication device, comprising:

at least one processor; and
at least one memory, configured to store at least one program;
the at least one program is executed by the at least one processor to implement the channel parameter receiving method according to any one of claims 1 to 12, or the channel parameter feedback method according to any one of claims 13 to 24.

**26.** A computer-readable storage medium, storing a program executable by a processor, wherein the program executable by the processor is executed by the processor to implement the channel parameter receiving method according to any one of claims 1 to 12, or the channel parameter feedback method according to any one of claims 13 to 24.

**27.** A computer program product, comprising a computer program or a computer instruction, wherein the computer program or the computer instruction is stored in a computer-readable storage medium, a processor of a communication device reads the computer program or the computer instruction from the computer-readable storage medium, and the processor executes the computer program or the computer instruction to cause the communication device to perform the channel parameter receiving method according to any one of claims 1 to 12, or the channel parameter feedback method according to any one of claims 13 to 24.

Communication system 100

Terminal device120

Terminal device121

Network device 110

Terminal device122

Fig. 1

```
┌─────────────────────────────────────────┐
│                                          │   S110
│        Acquire channel parameter         │
│                                          │
└─────────────────────────────────────────┘
                    │
                    ▼
┌─────────────────────────────────────────┐
│ Determine a target codebook set according│   S120
│  to channel information, and determine a  │
│  target codeword from the target codebook │
│                    set                    │
└─────────────────────────────────────────┘
                    │
                    ▼
┌─────────────────────────────────────────┐
│     Determine an indication parameter     │   S130
│    according to the target codeword, the  │
│  indication parameter being configured to │
│   indicate a value of a second parameter  │
└─────────────────────────────────────────┘
                    │
                    ▼
┌─────────────────────────────────────────┐
│                                          │   S140
│        Send the indication parameter      │
│                                          │
└─────────────────────────────────────────┘
```

Fig. 2

Fig. 3

$$O_2, \left[\widetilde{L}_2, \widetilde{L}_3\right)$$

$$\widetilde{L}_1 \quad O_1, \left[\widetilde{L}_1, \widetilde{L}_2\right) \quad \widetilde{L}_2 \qquad \widetilde{L}_3 \quad O_3, \left[\widetilde{L}_3, \widetilde{L}_4\right] \quad \widetilde{L}_4$$

Fig. 4a

$$O_2, \left[\widetilde{L}_2, \widetilde{L}_3\right)$$

$$\widetilde{L}_1 \quad O_1, \left[\widetilde{L}_1, \widetilde{L}_2\right) \quad \widetilde{L}_2 \qquad \widetilde{L}_3 \quad O_3, \left[\widetilde{L}_3, \widetilde{L}_4\right] \quad \widetilde{L}_4$$

Fig. 4b

$$\left[\widetilde{L}_2, \widetilde{L}_3\right)$$

$$\widetilde{L}_1 \quad \left[\widetilde{L}_1, \widetilde{L}_2\right) \quad \widetilde{L}_2 \qquad \widetilde{L}_3 \quad \left[\widetilde{L}_3, \widetilde{L}_4\right] \quad \widetilde{L}_4$$

Fig. 4c

Receive an indication parameter, the indication parameter being determined according to channel information — S210

Determine a value of a second parameter according to the indication parameter — S220

Determine a target codeword according to the value of the second parameter — S230

Fig. 5

Communication device 900

Processor — 910

Memory — 920

Fig. 6

## INTERNATIONAL SEARCH REPORT

| International application No. |
|---|
| **PCT/CN2023/132938** |

**A. CLASSIFICATION OF SUBJECT MATTER**

H04B7/0417(2017.01)i;  H04B7/0456(2017.01)i

According to International Patent Classification (IPC) or to both national classification and IPC

**B. FIELDS SEARCHED**

Minimum documentation searched (classification system followed by classification symbols)

IPC: H04B H04W H04L

Documentation searched other than minimum documentation to the extent that such documents are included in the fields searched

Electronic data base consulted during the international search (name of data base and, where practicable, search terms used)

CNTXT, ENTXTC, VEN, CNKI, 3GPP: 码本, 码字, 信道, 质量, 状态, 参数, 取值, 范围, 矩阵, 矢量, 近场, 距离, 天线, 波长, 反馈, codebook, channel, quality, CQI, CSI, parameter?, value, matrix, vector, near, distance, antenna?, wavelength, feedback

**C. DOCUMENTS CONSIDERED TO BE RELEVANT**

| Category* | Citation of document, with indication, where appropriate, of the relevant passages | Relevant to claim No. |
|---|---|---|
| A | US 2018248720 A1 (LG ELECTRONICS INC. et al.) 30 August 2018 (2018-08-30) description, paragraphs 277-299, and figure 13 | 1-27 |
| A | CN 114499613 A (TSINGHUA UNIVERSITY) 13 May 2022 (2022-05-13) entire document | 1-27 |
| A | WO 2023010458 A1 (APPLE INC.) 09 February 2023 (2023-02-09) entire document | 1-27 |
| A | Nokia, Nokia Shanghai Bell. "R1-1910914, On CSI enhancements for MU MIMO, UCI omissions and codebook restrictions_final" *3GPP tsg_ran\wg1_rl1, R1-1910914*, 05 October 2019 (2019-10-05), entire document | 1-27 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 February 2024** | **20 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/132938**

| Patent document cited in search report | | | Publication date (day/month/year) | Patent family member(s) | | | Publication date (day/month/year) |
|---|---|---|---|---|---|---|---|
| US | 2018248720 | A1 | 30 August 2018 | US | 10291441 | B2 | 14 May 2019 |
| | | | | WO | 2017030363 | A1 | 23 February 2017 |
| CN | 114499613 | A | 13 May 2022 | WO | 2023103356 | A1 | 15 June 2023 |
| WO | 2023010458 | A1 | 09 February 2023 | US | 2024014865 | A1 | 11 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310193127